# EUROPEAN PATENT APPLICATION

(11) **EP 3 098 770 A1**
(43) Date of publication of application: **30.11.2016**
(21) Application number: 15796318.2
(22) Date of filing: 21.05.2015
(51) Int. Cl.: G06Q 30/02

(54) **ADVERTISING METHOD AND DEVICE USING COHORT-BASED USER ANALYSIS PLATFORM AND MARKETING PLATFORM**

(30) Priority: 22.05.2014 KR 20140061374; 07.05.2015 KR 20150064109
(71) Applicant: Valuepotion Co., Ltd., Seoul 135-917 (KR)
(72) Inventor: KIM, KeeBeom, Seoul 138-891 (KR)
(74) Representative: Nuss, Laurent
(86) International application number: PCT/KR2015/005106
(87) International publication number: WO 2015/178697

(57) **Abstract**

Provided are: a method for using a cohort for both a user analysis platform and a marketing platform, a method for setting advertisement providing methods of a charging user and a non-charge user to be different; and a method for providing a reward advertisement during the execution of an application.

## Description

### TECHNICAL FIELD

The present invention relates to an advertisement method and an advertisement apparatus using a cohort in both a user analyzing platform and a marketing platform.

Particularly, the present invention relates to an advertisement method and an advertisement apparatus using a user analyzing platform and a marketing platform based on a cohort considering whether a user is charged as one characteristic of the cohort.

### BACKGROUND ART

A targeting advertisement represents an advertisement technique that does not target all users and executes an advertisement for a user that belongs to a targeting group by using user information to increase an advertisement effect.

However, in the targeting advertisement technique in the related art, a targeted user analyzing system that determines whether a user corresponds to a target option and a marketing system that executes an advertisement for a user who satisfies the targeting option are operated in separate systems and operate in different platforms. Further, in the targeting advertisement in the related art, target selection and a reference for target selection are individual users which become advertisement targets. For example, the user analyzing system and the marketing system operate on different hardware and/or different software.

The targeting advertisement technique in the related art has characteristics in that analysis is achieved for each of the individual users with static characteristics (a sex, an age, a region of origin, a school of graduate, and the like) (also referred to as 'user information' or 'user profile' in the specification) of the user and dynamic characteristics (a visit history in a specific website, the number of visit times, revisitation or not, and the like) (also referred to as 'user action information' in the specification) as an analysis reference.

In an aspect (that is, a marketing aspect) using data (alternatively, big data) acquired through the analysis for advertisement execution, the advertisement can be executed according to a new execution reference and inefficiency has been continuously present due to a difference between a reference of the analysis and a reference of the marketing.

### SUMMARY OF THE INVENTION

### Objective of Invention

The present invention has been made in an effort to provide an advertisement method and an advertisement apparatus which causes a user analyzing system and a marketing system to target the same cohort to increase efficiency of an advertisement and make a result of user analysis organically interlock with marketing, thereby optimizing a combination of an in-app income and an advertisement income of an application.

### Measures to achieve the objective

An exemplary embodiment of the present invention provides an advertisement providing method performed by an advertisement providing server apparatus including: acquiring information on an application user in order to generate a user group sharing a predetermined characteristic, that is, cohort; generating the cohort and analyzing the cohort in accordance with the collected information; generating a targeting user group, that is, a segment based on the cohort analysis information; and executing an advertisement for the segment.

The acquired user information and the cohort analysis information may be stored in a predetermined database to call and use the stored user information and cohort analysis information in the generating of the segment.

The advertisement may be executed in a first cohort and the advertisement may not be executed in a second cohort.

The segment may be generated to correspond to a combination of a plurality of cohorts or one segment may be generated to correspond to one cohort.

An advertisement area of a user terminal of the first cohort in which the advertisement is executed may be decided differently in accordance with a characteristic of the cohort.

The first cohort may be a cohort in which in-app sales are not generated and the second cohort may be a cohort in which the in-app sales are generated.

The method may further include registering an application such as a game application to which the advertisement is exposed in the advertisement providing server.

Two or more cohorts may be generated by using at least any one of payment of an item in the application or not, the number of residual items, a payment frequency, a payment sum, generation of sessions or not and the number of sessions in the application, an access record of the application, the number of access times, an access time zone, a level of the session in the application, and an installation path (that is, an introduction path into the application).

The method may further include a feedback step of monitoring reactions of users and changing cohort generation information such as a criterion of the cohort and the number of cohorts, after executing an advertisement for the segment.

The reactions of the users may be any one of in-app sales, the number of purchase cases, an average payment sum per user, an average payment sum per purchase user, the number of purchase users and purchase rate, an advertisement income, and the number of application sessions/an average session time.

The application may be a game application, and the advertisement is not executed in a time zone in which a game play is active by analyzing the application access time zone or an advertisement medium is differently selected based on whether or not it is in the time zone in which the game play is active.

In the generating of the cohort and the analyzing of the cohort, a user access record may be analyzed and in the generating of the segment, a promotion advertisement such as a reward advertisement may be executed for a cohort in which the number of application access times decreases by using the analyzed access record.

Another exemplary embodiment of the present invention provides an advertisement providing server apparatus based on a cohort including: a user analyzing system acquiring information on an application user in order to generate a user group sharing a predetermined characteristic, that is, cohort and generating the cohort and analyzing the cohort in accordance with the collected information; and a marketing system generating a targeting user group, that is, a segment based on the cohort analysis information and executing an advertisement in the segment.

The user analyzing system may store the acquired user information and the cohort analysis information in a predetermined database, and the marketing system may call and use the stored user information and the cohort analysis information in segmentation.

The marketing system may execute the advertisement in a first cohort and may not execute the advertisement in a second cohort.

The segment may be generated to correspond to a combination of a plurality of cohorts or one segment may be generated to correspond to one cohort.

An advertisement area of a user terminal of the first cohort in which the advertisement is executed may be decided differently in accordance with a characteristic of the cohort.

The first cohort may be a cohort in which in-app sales are not generated and the second cohort may be a cohort in which the in-app sales are generated.

An application such as a game application to which the advertisement is exposed may be registered in the advertisement providing server and the user analyzing system may generate and analyze the cohort based on information on a user of the application and the marketing system may decide whether to execute the advertisement in the application.

Two or more cohorts may be generated by using at least any one of payment of an item in the application or not, the number of residual items, a payment frequency, a payment sum, generation of sessions or not and the number of sessions in the application, an access record of the application, the number of access times, an access time zone, a level of the session in the application, and an installation path (that is, an introduction path into the application).

The advertisement may be executed in the segment and reactions of users may be monitored and cohort generation information such as a criterion of the cohort and the number of cohorts may be changed.

The reactions of the users may be any one of in-app sales, the number of purchase cases, an average payment sum per user, an average payment sum per purchase user, the number of purchase users and purchase rate, an advertisement income, and the number of application sessions/an average session time.

The application may be a game application, and the advertisement is not executed in a time zone in which a game play is active by analyzing the application access time zone or an advertisement medium is differently selected based on whether or not it is in the time zone in which the game play is active.

The user analyzing system may analyze a user access record and the marketing system may execute a promotion advertisement such as a reward advertisement for a cohort in which the number of application access times decreases by using the analyzed access record.

### Advantageous effect

According to exemplary embodiments of the present invention, a cohort for user analysis can be just used as an advertisement targeting segment for marketing.

According to the exemplary embodiments of the present invention, a user identifier of the cohort generated for the user analysis and a user identifier of a targeting segment can be applied according to the same reference, and as a result, marketing execution targeting a user group which is the same as an analyzed user group can be achieved.

According to the exemplary embodiments of the present invention, previously generated cohorts are combined to easily configure an additional targeting segment.

Therefore, a combination of in-app sales and an advertisement income in an application (e.g., a game) can be maximized.

### BRIEF DESCRIPTION OF THE DRAWINGS

FIG. 1 is a block diagram for describing an environment providing an advertisement method and an advertisement apparatus using a user analyzing platform and a marketing platform based on a cohort of the present invention.
FIG. 2 is a block diagram for describing a configuration of an advertisement providing server according to an exemplary embodiment of the present invention.
FIG. 3 is a flowchart for describing an advertisement providing method according to another exemplary embodiment of the present invention.
FIG. 4 is a flowchart for describing the advertisement providing method of the present invention in another viewpoint.
FIG. 5 is a conceptual diagram for schematically describing an analysis mechanism in an advertisement providing server of the present invention.
FIG. 6 is a conceptual diagram for schematically describing a marketing mechanism in the advertisement providing server of the present invention.
FIG. 7 shows examples of in-app marketing.

### DETAILED DESCRIPTION

Various advantages and features of the present invention and methods accomplishing them will become apparent from embodiments described below in detail with reference to the accompanying drawings. However, the present invention is not limited to exemplary embodiments to be disclosed below, but various forms different from each other may be implemented. The exemplary embodiments are merely intended to make the disclosure of the present invention complete and to completely notify the person with ordinary skill in the art, to which the present invention belongs, of the scope of the invention, and the present invention is only defined by the scope of the claims.

Designating that one element is "connected to" or "coupled to" other elements includes both the case where the element is directly connected or coupled to other elements and other elements are interposed therebetween. On the contrary, designating that one element is "directly connected to" or "directly coupled to" other elements represents the case where other elements or layers are not interposed therebetween.

Like reference numerals indicate like elements throughout the specification. In the specification, "and/or" includes respective mentioned items and all combinations of one or more items.

Although first, second, and the like are used to describe various elements, modules, and/or sections, the elements, modules, and/or sections are not limited to the terms, of course. The terms are just used to distinguish one element, module, or sections from other elements, modules, or sections. Therefore, a first element, a first module, or a first section mentioned below may be a second element, a second module, or a second section within the technical spirit of the present invention, of course.

Unless particularly stated otherwise in the present specification, a singular form also includes a plural form.

The meaning of "comprises" and/or "comprising" used in this specification does not exclude the existence or addition of aforementioned elements, modules, and/or sections, and one or more other elements, modules, and/or sections.

If there is no other definition, all terms (including technical and scientific terms) used in the specification may be used as meanings which may be commonly appreciated by those skilled in the art. Further, terms defined in a dictionary which is used should not be ideally or excessively interpreted unless not clearly and particularly defined.

Hereinafter, exemplary embodiments of the present invention will be described in detail with reference to the accompanying drawings.

As described below, one object of the present invention is to optimize a combination of in-app sales of an application, that is, an income (item selling income) generated while users use the application and an advertisement income exposed to the application and to this end, in the specification, as one example of the application, when a term 'game' is used, this is just exemplified for a descriptive object and it should be appreciated that all applications, mobile applications, in particular, instant messenger applications to which problem solving means of the present invention may be applied are included.

In a recent mobile environment, in particular, a game development platform environment, it is meaningful to decide whether the advertisement is executed and an execution method of the advertisement/a type of the advertisement for example, by determining characteristics of a user group rather than static characteristics or dynamic characteristics of individual users.

As one example, since game A has been recently released to be present in a promotion step, in the case of game A, it is assumed that it is important that the user maximally concentrate on the game and are interested in the game, in the case of game B, there is a trend that users are rapidly increased after a recent media report that famous entertainers have favorably used game B, and in the case of game C, a user of a predetermined level is secured as a steady seller for several years. In this case, in terms of a game developer, an advertiser recruit for a user of game A is not easy and at a current time, increasing game users as the game users concentrate on the game and are interested in the game may be decided as a more urgent priority than acquiring an advertisement income by exposing the advertisement to the user of game A. In the case of game B, there is a trend that the users are rapidly increased and new advertisers are also significantly increased, and as a result, an advertisement price is significantly increased. Therefore, acquiring a larger short-term advertisement income is preferred by significantly increasing advertisement execution than the game users slightly feeling inconvenience in game progress due to frequent appearance of a banner during the game. In the case of game C, since a considerable number of mania users have been already secured and new users are also steadily introduced, a dualization strategy is made, which minimizes the advertisement exposure to the existing mania users by using game item selling as an income source or maximizes item selling by concentrating on more time by interrupting the advertisement and concentratively exposes the advertisement to users who do not purchase the game item among the new users and uses the advertisement income as the income source from the exposed advertisement. In the present invention, a discriminative advertisement strategy may be implemented and a new concept of improving a combination of the in-app sales and the advertisement income is adopted.

In the present invention, as known from such an example, information of the user is collected and analyzed to be classified into two or more cohorts and whether the advertisement is executed is also decided by using the user as a targeting object by the unit of a segment based on the cohort or by combining the cohorts.

As the user analysis result, a segment (group) of users sharing a specific tendency is referred to as the cohort. The cohort represents an aggregate of people sharing a specific experience or feature (e.g., age). In particular, the 'cohort' in the present invention will be appreciated as the aggregate sharing various specific experiences or features and further, should be appreciated as even an aggregate of users sharing various specific experiences or features at a specific time. For example, various user aggregates sharing the same specific experience or feature may be present and when specific time/periods when the user aggregates share the specific experience or feature are different from each other, the user aggregates may be defined as different cohorts. In the specification, a term representing the user group is distinguished by using a term of the cohort in the user analyzing step and by using a term of the segment in the marketing execution step, but the cohort and the segment may have a 1:1 1 relationship with each other and the combination of the cohorts may form one segment or otherwise.

When the cohort concept is introduced, the user analysis criterion is configured by the unit of the cohort and the analysis is performed by the unit of the cohort and thereafter, even the advertisement execution is performed with the segment, and as a result, superior effect promotion of the advertisement execution may be achieved when not characteristics of individual users but the user group has a specific characteristic.

Since both of the cohort and the segment mean an aggregate of the individual users, the necessity of identification of the individual users exists and therefore, the individual users have unique identifiers. In the present invention, identifiers of individual users at the time of generating the cohort and of individual users at the time of generating the segment (segmentation) are the same as each other to allow the analysis and the marketing to interlock with each other according to the same criterion.

Hereinafter, exemplary embodiments of the present invention will be described in detail with reference to the accompanying drawings.

An advertisement method and an advertisement apparatus using a user analyzing platform and a marketing platform based on a cohort according to the present invention will be described below in more detail based on specific exemplary embodiments.

### [Method using cohort in both user analyzing platform and marketing platform]

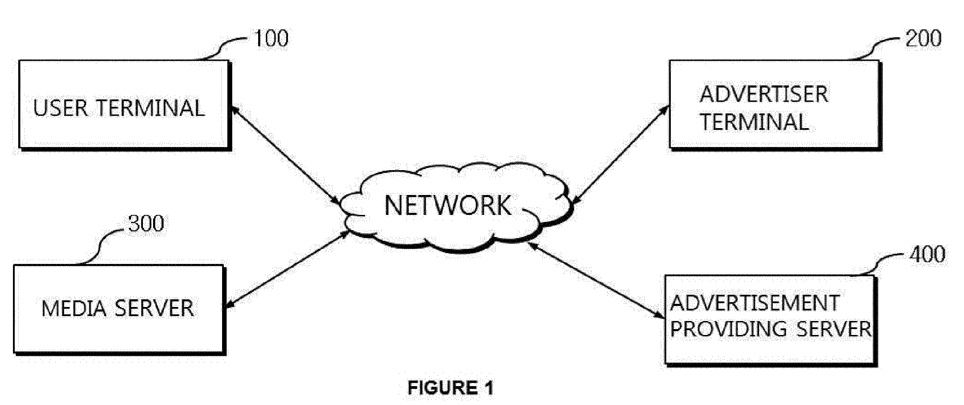

FIG. 1 is a block diagram for describing an environment providing an advertisement providing method and an advertisement providing server according to an exemplary embodiment of the present invention.

Referring to FIG. 1, a user terminal 100, an advertiser terminal 200, a media server 300, and an advertisement providing server 400 are connected to each other through a network. The user terminal 100, the advertiser terminal 200, the media server 300, and the advertisement providing server 400 may transmit/receive data and/or information to/from each other.

The network may be constituted by networks having various sizes, which include a local area network (LAN), a metropolitan area network (MAN), a wide area network (WAN), and the like. The network may be constituted by a wired or wireless network.

The user terminal may be a personal computer (PC) such as a desk top, a lap top, or the like. Alternatively, the user terminal may be a portable electronic apparatus such as a smart phone, a personal digital assistant (PDA), a tablet PC, or the like. The user terminal may be another computing apparatus which is not exemplified.

The user terminal may install a (mobile) application and execute the application by an operation by a user. The user terminal may download the application from an external apparatus (alternatively, a server). The user terminal may include one or more processors for executing the application.

The user terminal may install a corresponding application by a method of searching an application to be installed by an application market by directly accessing the application market (alternatively, a store). Alternatively, the user terminal may receive an installation path (alternatively, a link) of the application from separate media and install the application through the corresponding installation path. The media provides an advertisement of the corresponding application to the user terminal by a method of providing the installation path of the corresponding application.

The user terminal 100 may include constituent elements such as a communication unit, a control unit, an input/output unit, a memory unit, and the like and perform operations such as communication, processing, input/output, storage, and the like of data and/or information.

The advertiser terminal 200 may be the personal computer such as the desk top, the lap top, or the like. Alternatively, the advertiser terminal 200 may be the portable electronic apparatus such as the smart phone, the PDA, the tablet PC, or the like. The advertiser terminal 200 may be another computing apparatus which is not exemplified.

According to the exemplary embodiment, the advertiser terminal 200 may be substituted with a server which an advertiser operates to provide a product or a service.

The advertiser terminal 200 may directly or indirectly transmit advertisement information to the advertisement providing server 400. An advertisement may include an advertisement in which one or more elements such as a text advertisement, a banner advertisement, an image advertisement, an audio advertisement, a video advertisement, an in-app advertisement, and the like are combined.

The media server 300 may provide contents such as various texts, photographs, music, moving pictures, and the like to the user terminal 100. For example, the media server 300 may be a portal site server providing various contents service. Alternatively, the media server 300 may be a search engine providing various contents as a search result to the user terminal 100 in response to a search query received from the user terminal 100. The media server 300 may be a type in which a portal site and the search engine are combined.

In FIG. 1, the media server 300 and the advertisement providing server 400 are separately illustrated, according to the exemplary embodiment, the media server 300 may be provided as a type in which the media server 300 is combined with the advertisement providing server 400. That is, it will be apparently appreciated by those skilled in the art that the media server 300 and the advertisement providing server 400 may be integrally configured.

In FIG. 1, only one media server 300 is illustrated, but the present invention is not limited thereto and a plurality of media servers 300 may be connected with the user terminal 100, the advertiser terminal 200, and the advertisement providing server 400 through the network.

The advertisement providing server 400 may receive an advertisement request from the media server 300 or the user terminal 100 and provide the advertisement to the user terminal 100 in response to the received advertisement request. The user terminal 100 may transmit the advertisement request to the advertisement providing server at the time of performing a predetermined application.

According to the exemplary embodiment, the advertisement providing server 400 may be provided as some constituent elements of the server that interlock with the predetermined application (e.g., a game).

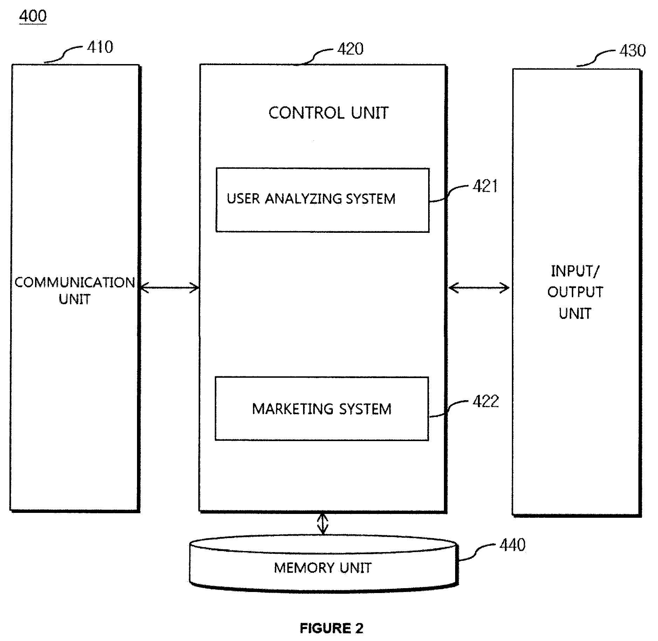

Referring to FIG. 2, the advertisement providing server 400 according to the exemplary embodiment of the present invention may include a communication unit 410, a control unit 420, an input/output unit 430, and a memory unit 440.

The communication unit 410 may transmit/receive various data and/or information to/from the external apparatus through the network. The communication unit 410 may be constituted by various communication modules which may perform network communication.

The communication unit 410 may receive search history information of users and action history information (dynamic information of the user) from the media server 300. The communication unit 410 may receive information (static information of the user) on the user from the user terminal 100.

According to the exemplary embodiment, the communication unit 410 may receive the search query and various requests from the user terminal 100. The communication unit 410 may record a search keyword included in the search query and a reception time of the search query. Various requests may be related with a user action. For example, the user may conduct an action in which the user visits a specific site or an action in which the user purchases a specific product at a specific site by using the user terminal 100. Further, the user may conduct an action such as purchasing a game item while executing a specific game application by using the user terminal 100. In addition, the communication unit 410 may record user action information by distinguishing various requests transmitted by the user terminal 100 for such an action. The communication unit 410 may record reception times of various requests in association with the user action information.

The communication unit 410 may receive the advertisement information from the advertiser terminal 200. The advertisement information may include advertisement contents, a targeting set value of the advertisement, tender information of the advertisement, and the like.

The control unit 420 of the advertisement providing server 400 may include a user analyzing system 421 and a marketing system 422. Of course, the user analyzing system 421 and the marketing system 422 may be implemented in a separate server, for example, a game developer server, but in the present invention, the control unit 421 of the advertisement providing server 400 includes the user analyzing system 421 and the marketing system 422 therein for easy description.

The control unit 420 performs a command and/or a program to control all operations of the advertisement providing server 400. The control unit 420 may include at least one hardware module (for example, a processor) that processes data and/or information.

The user analyzing system 421 of the control unit 420 may collect user information through the communication unit 410, and the like and classify a plurality of users into one or more user groups (cohorts) by using the collected user information.

The user analyzing system 421 may receive the user information from the user terminal (through the communication unit).

The user analyzing system 421 may collect log-in based user information or non-log-in based user information (through the communication unit).

The log-in based user information may include information on, for example, a user profile (name, age, sex, address, job, hobby, categories of preference, and the like), a cafe history, a blog history, a shopping history, a various site/page visitation history, and the like. The non-log-in based user information may include various action information such as cookie information, bookmark information, and game item purchase information.

The user analyzing system 421 may collect the user action information associated with the application.

The user analyzing system 421 may collect the user action information generated while the user terminal executes the application and the user action information generated in association with the application while the user terminal does not execute the application.

In detail, the user analyzing system 421 may collect various user action information such as an installation path, an installation time, a joining time, an execution time, an access time, a profile registration time, a phone number registration/authentication time, an item purchase time, a friend invitation time, a review time, a marketing reaction history, and the like in association with the application.

The user action information may include even maintenance state information of a user account such as joining, usage, withdrawal, and the like. The user action information may include information on installation of the application or not, re-execution or not, the number of execution/access times, sales, and the like.

The user action information may include information associated with all user actions which may be collected in association with the application.

The user analyzing system 421 may collect introduction information regarding through what path the user is introduced into a mobile application, a webpage, and the like in which the advertisement is executed. For example, in recent years, a distribution platform of a mobile game has been multilayered and an installation path of one game may become a "K" mobile instant messenger platform, an "L" mobile instant messenger platform, or a "CS" mobile cost per installation (CPI) based reward application platform. In general, a game application is downloaded from an app store via the instant messenger platform to be installed.

The user analyzing system 421 may collect and analyze characteristics (static information and dynamic information) of the user which is introduced through the multiple platforms based on the introduction platform.

As one example, the introduction through the "K" mobile instant messenger platform, the introduction through the "L" mobile instant messenger platform, and the introduction through the "CS" mobile CPI based reward application platform may serve as one criterion of the user analysis and users of platform identifiers are classified into separate cohorts and the user static information and the user dynamic information may be collected and classified for each cohort.

In particular, installation or not, deletion or not, reinstallation or not, purchase of an item or not, generation of a session or not, click or not/click count of a specific page, and the like of a specific application may be collected and analyzed based on each platform. In the present invention, the 'session' may be appreciated as each execution step of the application, a sub menu, a level of the game, or a period until terminating the application such as the game after executing the application such as the game once.

Herein, the cohorts of the respective users formed by classifying the users for each platform become cohorts sharing the characteristics of the "platform". For example, the users that are introduced through the "K" mobile instant messenger platform become cohort 1, the users that are introduced through the "L" mobile instant messenger platform become cohort 2, and the users that are introduced through the "CS" mobile CPI based reward application platform become cohort 3. Of course, cohort 1, cohort 2, and cohort 3 of each platform criterion may be subdivided into sub cohorts such as cohort 1a, cohort 1b, and cohort 1c according to a detailed classification criterion (for example, item purchase information) in the respective cohorts. Similarly, cohort 1a may also be subdivided again.

An advantage in the case of using the cohort and subdividing the cohort is that, for example, tendencies of a user who acquires a reward through the CPI based reward application and thereafter, does not continuously use or deletes the application or withdraws a service, a user who plays the game application without purchasing the item, that is, a cherry picker are analyzed and the users are distinguished from a genuine user to interlock with the advertisement execution or not and an advertisement execution method to be described below, which may be analyzed and decided for each cohort.

Payment of the item or not, generation of the game session or not and the number of game sessions, and a game level may be an analysis criterion of the cohort in a game application user.

Meanwhile, the exemplary embodiment of the present invention is not limited thereto and the user information may include various pieces of information which is not exemplified. The user analysis system may collect the user information through various paths under various user environments.

As described above, the user may be analyzed based on the user information and the cohort may be generated or classified and the user information (e.g., the payment of the item or not) may be subdivided and analyzed according to a specific time or a specific period again. Therefore, user groups sharing one piece of user information during different specific times or specific periods may be classified as different cohorts. A temporal consideration is included in the generation or classification of the cohort, and as a result, evaluation of the characteristics of the user is further subdivided and collection, evaluation, and classification of the user information may be thus enabled through various paths under more various user environments. That is to say, in any one user group, the sum and a frequency of the item payment during last 7 days are high, but the average sum and frequency of the item payment during last 30 days may be relatively low and in another user group, the average sum and frequency of the item payment during last 30 days are relatively high, but the average sum and frequency of the item payment during last 7 days may also not significantly vary as compared with those during last 30 days. In this case, the user analyzing system 421 may classify the user group in which the payment sum and frequency during last 7 days are high as a group which is anticipated to pay later more sum more frequently rather than the group in which the payment sum and frequency during last 30 days are relatively high, that is, the cohort.

The user analyzing system 421 may store the collected user information in a database.

The user analyzing system 421 may analyze various pieces of user information including the user action information associated with the application. In addition, the user analyzing system 421 may extract action characteristics of the respective users according to an analysis result of the user information.

The user analyzing system 421 classifies the users according to one or more various criteria to generate the cohort.

The user analyzing system 421 of the present invention may classify the plurality of users into one or more cohorts according to the action characteristics of the user. The cohort may be defined as a group of users sharing predetermined action characteristics.

The cohort of the present invention may be hierarchically configured. For example, one cohort may include one or more sub cohorts as described above.

One or more sub cohorts included in one cohort may have the same first action characteristic or different second action characteristics. The first action characteristic and the second action characteristic may have the same level or a relationship of high and low levels. The second action characteristic may show a detailed action characteristic of the first action characteristic.

A hierarchical structure of the cohort may be constituted by first to n-th (however, n is a natural number larger than 1) layers.

Meanwhile, cohort identifiers for identifying the respective cohorts may be used.

The user analyzing system 421 may additionally allocate the cohort identifiers to the respective users in addition to user identifiers. The plurality of users that belongs to the same cohort may be allocated with the same cohort identifier.

The user analyzing system 421 may generate the cohort according to an advertisement channel in which the user is introduced. That is, users introduced (alternatively, installing the application) through a first advertisement channel may be classified as the first cohort and users introduced (alternatively, installing the application) through a second advertisement channel may be classified as the second cohort.

Alternatively, the user analyzing system 421 may generate the cohort according to the number of access times by the user, the number of execution times, the number of payment times/ the sum, and the like. Alternatively, the user analyzing system may generate the cohort according to a level of the user, and the like in the application (e.g., the game).

The marketing system 422 may perform user segmentation. The user segmentation is a method that classifies users having a similar characteristic into one user group (segment) for effective marketing.

The marketing system 422 is generally defined as a system that decides the advertisement execution or not and an advertisement target based on the collected or analyzed user information. However, the marketing system in the related art decides the advertisement execution or not and the advertisement target based on information on individual users similarly as the user analyzing system and moreover, the analysis criterion in the user analyzing system and an execution criterion in the marketing system may not interlock with each other, and as a result, the analysis and the execution are separately operated. Therefore, there is an intrinsic limit in increasing advertisement efficiency.

Contrary to this, in the present invention, the analysis criterion in the user analyzing system 421, that is, the identifier of the cohort is just adopted as the segment identifier in the marketing system 422. Therefore, the cohort classified in the user analyzing system 421 is wholly used in the advertisement execution in the marketing system 422.

To this end, the user analyzing system 421 may store information of the generated cohort in for example, the database of the marketing system 422. In this case, the information of the cohort may be transmitted/received between the user analyzing system and the marketing system.

Alternatively, an operator may download the information of the generated cohort from the user analyzing system 421 and upload the information of the cohort to the database of the marketing system 422.

The information of the cohort may include the user information of the users that belong to the respective cohorts and the identifiers of the respective cohorts.

Even in the marketing system 422, the identifier which becomes the criterion of the segmentation at the time of performing the user segmentation is the same as the segmentation identifier of the user analyzing system 421.

The marketing system 422 may classify the plurality of users into one or more segments by using the user information stored in the database.

The marketing system 422 may select some segments ("targeting segments") among one or more segments and may execute marketing specialized to users that belong to the selected targeting segments.

The marketing system 422 may select the targeting segment based on the user information, for example. In detail, the marketing system 422 may select the targeting segment based on the user action information such as the installation or not, the re-execution or not, the number of executions/accesses, the sales, and the like of the application. That is, the marketing system 422 may select the targeting segment by using information which is the same as or similar to information which the user analyzing system 421 uses to classify the cohort. However, even in the case of using the similar information, a cohort which is the same as the cohort classified in the user analyzing system 421 may be used in the marketing system 422.

The marketing system 422 may additionally allocate the segment identifiers to the respective users in addition to the user identifiers. The plurality of users that belongs to the same segment may be allocated with the same segment identifier. Therefore, the users may be identified by the individual identifiers of the users and a segment cohort which the user belongs to may be identified by the segment identifier.

According to the exemplary embodiment of the present invention, the marketing system 422 may select one or more cohorts as the targeting segments.

That is, for the segmentation, the marketing system 422 may just use the cohort as the segment without the need of newly generating the respective segments. That is, cohorts of users having the same attribute may be recognized as the targeting segments.

As a result, the marketing system 422 may configure the targeting segments by using the cohorts generated by the user analyzing system 421 or a combination of the cohorts. Further, the marketing system 422 may additionally configure a new targeting segment by using the cohorts generated by the user analyzing system 421 or the combination of the cohorts.

That is, two or more cohorts classified by the user analyzing system 421 may be classified as the same segment by the marketing system 422. The reason is that as necessary, the marketing system needs to also decide the advertisement execution or not or a type or a method of the executed advertisement similarly with respect to two or more cohorts classified by the user analyzing system 421. As one example, the advertisement may be decided not to be executed for the cohort introduced into the "K" mobile instant messenger platform and the cohort introduced into the "CS" mobile cost per installation (CPI) based reward application platform and the advertisement may be decided to be executed only for the cohort introduced into the "L" mobile instant messenger platform.

The marketing system 422 may analyze the information of the users that belong to the respective cohorts and establish a marketing strategy targeting each of the cohorts. The operator may input the marketing strategy in the marketing system 422 according to the criterion for classifying the targeting segment in advance.

In the exemplary embodiment of the present invention, since the cohort is used as the segment, the operator (alternatively, the advertiser or the game developer) may input the marketing strategy according to the characteristic of the cohort in advance. As necessary, the operator may update and input the marketing strategy.

In more detail, the advertiser terminal 200 or a developer server of the game application may decide the classification criterion of the cohort in advance and provide the decided classification criterion to the advertisement providing server 400. Further, the advertiser terminal 200 or the developer server of the game application may register the game application in the advertisement providing server 400, register two or more game applications, or configure a separate cohort classification criterion with respect to each game application. As described above, cohorts of separate criteria may be generated in games A, B, and C.

Herein, the marketing includes a method that provides the advertisement to the user terminal or a method that provides a reward to a predetermined user action. In particular, in the present invention, a concept of the marketing includes a concept for distinguishing performing the marketing and not performing the marketing to include a strategy that does not execute the advertisement for a specific cohort (segment) and executes a plurality of advertisements for another cohort (segment). However, the exemplary embodiment of the present invention is not limited thereto and the marketing method may include various methods which are not exemplified.

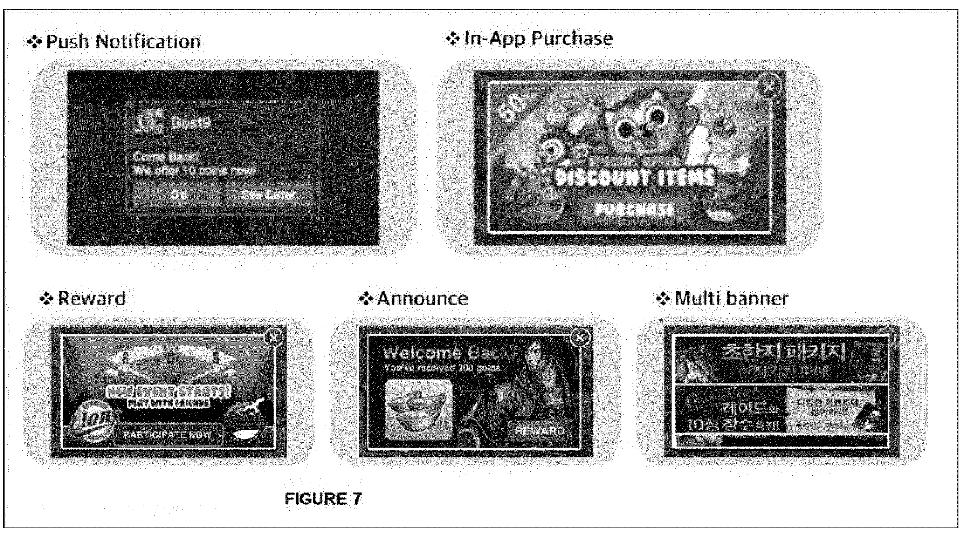

In particular, in the present invention, in order to induce active action, participation, purchase, and the like of the users, as the in-app marketing, push message (notification) and reward providing to the user, various guide messages (announce), an in-app purchase induction message (in-app purchase), and one or two or more multi-banner techniques illustrated in the FIG. 7 as an example are used. Repeatedly, in the present invention, the active marketing and 'passive' marketing that does not execute the advertisement are different from each other for each cohort.

As described above, the marketing system 422 may use the segment identifier in order to identify the user. The marketing system 422 may allocate the same value as the cohort identifier of the corresponding cohort as a value of the segment identifier. That is, the marketing system 422 may use the cohort identifier of the user analyzing system 421 as the segment identifier. Therefore, in this point, in the present invention, the cohort and the segment may be regarded as the same concept.

Alternatively, the marketing system 422 does not newly allocate the segment identifier and may just use the cohort identifier as the segment identifier.

The user analyzing system 421 and the marketing system 422 may operate in different platforms. The user analyzing system 421 and the marketing system 422 may operate, for example, on different hardware and/or different software (for example, an operating system (OS)).

In the exemplary embodiment of the present invention, the user analyzing system 421 and the marketing system 422 operate in different platforms, but since (the user groups are classified or the user groups are not classified multiple times according to the respective criteria) the marketing system 422 executes marketing specialized to the respective cohorts by using the cohort generated by the user analyzing system 421, optimized marketing may be more efficiently executed.

The input/output unit 430 may interface with the operator of the advertisement providing server 400. The operator may input various pieces of information to the advertisement providing server 400 through the input/output unit 430 and the advertisement providing server 400 may output various pieces of information to the operator through the input/output unit 430.

The memory unit 440 may store the command and/or program or store the data and/or information. For example, the memory unit 440 may be a storage device such as a hard disk or a flash memory. The memory unit 440 may be another storage medium which is not exemplified.

The memory unit 440 may receive search history information and action history information of the users from the communication unit 410 and store the received information. Further, the memory unit 440 may store a classification criterion, an identifier, information of the classified cohort, and analysis information used by the user analyzing system 421 and the marketing system 422 may call and use the stored classification criterion, identifier, information of the classified cohort, and analysis information. The databases of the user analyzing system 421 and the marketing system 422 may be configured in the memory unit 440 and implemented in the control unit 420, and implemented as a separate device.

According to the exemplary embodiment, the memory unit 440 may receive search keywords and action information of the users from the communication unit 410 and store search history information and action history information in which the search keywords and action information are accumulated as time elapses. Further, the memory unit 440 may store an introduction path of the user, an application execution/deletion history, item purchase details of the user, a history of the in-app marketing of the advertisement server, and the like.

The memory unit 440 may receive time information from the communication unit 410 and store the received time information.

The memory unit 440 may receive the advertisement information from the communication unit 410 and store advertisement contents, a targeting set value of the advertisement, tender information of the advertisement, and the like.

The memory unit 440 may include a database for structuralizing and storing the various pieces of information and providing search and update functions.

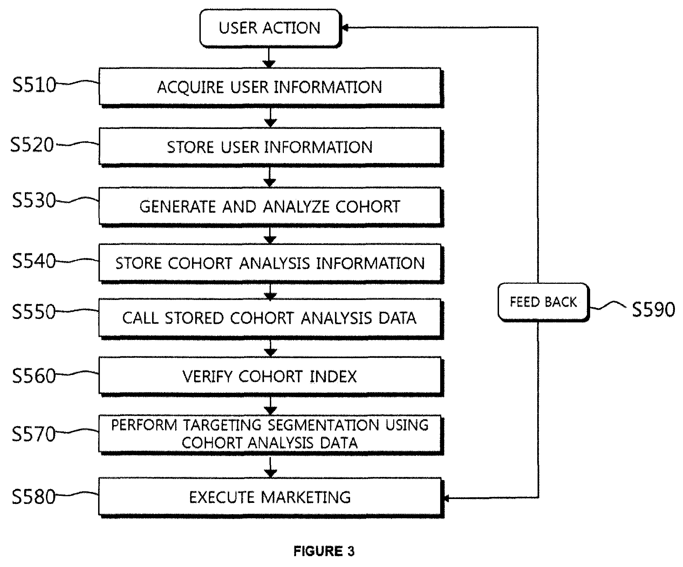

FIG. 3 is a flowchart for describing an advertisement providing method according to an exemplary embodiment of the present invention.

In the advertisement providing method of the present invention, the user analyzing system 421 of the advertisement providing server 400 acquires user action information (S510). The user analyzing system 421 may store the acquired action information in the database of the user analyzing system 421 or the memory unit 440 or a third storage medium. The user analyzing system 421 may generate and analyze the cohort by using the acquired information of the user (S530). The user analyzing system 421 may classify users based on the analyzed cohort. That is, the user analyzing system 421 may classify individual users so that the individual users belong to any one cohort or two or more cohorts.

As such, cohort analysis information (cohort based user analysis information) generated by the user analyzing system 421 is stored in the database (S540) to be just used in a segmentation step of the marketing system 422. To this end, the marketing system 422 calls the stored cohort analysis data (S550) and verifies an index (identifier) of the called cohort (S560).

As described above, the cohort generated by the user analyzing system 421 may correspond to one segment in the marketing system 422, but two or more cohorts may correspond to one segment and two cohorts may correspond to one segment. The marketing system performs segmentation that generates a segment which becomes a marketing target through such a process (S570).

The advertisement providing server 400 executes the advertisement based on a segmentation result.

As described above, the segment in which the advertisement is not executed at all may be present or the segment in which the plurality of advertisements is executed at once may also be present. Therefore, for example, an optimal advertisement executing method or targeting method may be provided based on analysis data specialized to the game and the game user to achieve optimization of the income through the game application together with the efficiency of the advertisement.

That is, an object of the present invention is just to maximize the advertisement income but to optimize income by the advertisement and income by selling the application game item, using a harmonization with the income through the game by analyzing the specialized data of the application (game) and the application (game) user.

Since the advertisement execution method varies for each cohort or segment, an analysis result of characteristics of multiple individual users that belong to any one cohort may be reflected to the marketing (advertisement execution). In terms of such a point, the advertisement will be intrinsically different from the targeting advertisement in the related art, which just reflects the information of the individual users. In the present invention, efficiency may be analyzed as compared with cost for each channel through a kind of marketing channel analysis and marketing channel optimization may be achieved based on a revenue per install (RPI). Further, RPI data for each application may be provided additionally or in parallel to the channel analysis. Therefore, according to the present invention, similar users are segmented by the cohorts according to a game pattern or payment or not of the user to maximize the income through performing marketing or advertisement.

The advertisement providing server 400 repeats steps S510 to S580 described above by reflecting various reactions of the user by the execution of the advertisement (S590). In the feedback step, user access status and payment status information for the executed advertisement before and after the advertisement execution as well as reaction or not and reaction rate of the user to the executed advertisement may be reflected. Therefore, action changes of the users which vary momentarily for each life cycle of the game are reflected and appropriately reflected to future advertisement execution or marketing to consequently provide even a prediction of a future value of the game.

For example, when a tendency is shown, in which sales of the game item are decreased at a specific time of the life cycle of the game, a strategy may be devised, which preserves a decrease in sales income of the game item with the advertisement income by improving a ratio of the advertisement executed previously and when it is considered that a user drained in a specific game is generally introduced into another game, an advertisement execution rate may be decreased and the item sales may be increased in the game in which the number of users increases, thereby creating a wholly combined income. This serves to reconsider the efficiency of the advertisement execution and the item sales and the reason is that apart from the efficiency of the advertisement deteriorating when the advertisement execution is continuously increased in spite of a cohort in which the characteristic of the game user is interested in the item purchase, there is a possibility that the user is eventually separated from the corresponding game and in the present invention, even such a risk may be minimized.

The advertiser terminal 200 or the developer server of the game application monitors reactions of the users to previous marketing, for example, in-app sales, the number of purchase cases, an average payment sum per user, an average payment sum per purchase user, the number of purchase users and a purchase rate, an advertisement income, the number of application sessions/an average session time, and the like and changes a criterion of the cohort, the number of cohorts, and the like to be fed back so as to perform subsequent user analysis.

In the user analyzing system 421 of the present invention, the game pattern and the payment frequency may be considered in analyzing the cohort characteristic.

Information on access frequencies of users who install the game may be provided in the user analyzing system 421, and as a result, a marketing plane may be established by analyzing royalties and separation rate of the users.

In the marketing system 422, a game using time zone is analyzed based on an access record of the user to decide an advertisement execution time. For example, an advertisement that interferes with the game is not executed in a time zone which concentrates on the game and an advertisement that does not significantly interfere with concentration on the game like a simple event guide advertisement may be executed.

In particular, in the present invention, the marketing system 422 may execute the advertisement while directly controlling an area of the advertisement execution in order not to interfere with the game execution of the user or to maximize the game execution. Further, the advertisement is executed at the time when the game user temporarily stops the play such as start and end times of the game or a stage movement time to minimize game interference.

In the user analyzing system 421, the access record of the user may be analyzed and in the marketing system 422, a game participation inducement reward advertisement may be executed for a user of which the number of game access times decreases.

In the user analyzing system 421, the access record of the user is analyzed and in the marketing system 422, visitation inducement push notification or reward advertisement may be executed to a user of a specific cohort without an access history during the predetermined number of days or a user of a specific cohort, which does not access the game after installing the game once.

In the user analyzing system 421, the payment pattern of the user may be analyzed and in the marketing system 422, a game discount item advertisement may be executed in order to induce the payment of the user of the specific cohort. In addition, in the user analyzing system 421, a residual item of the user is analyzed and in the marketing system 422, the advertisement that induces the payment of the user of the specific cohort may be executed.

In the present invention, a tracking link may be generated in order to acquire information on an action of a user. Further, in the present invention, game data of the user may be collected.

In the present invention, any one advertisement may be exposed to not all users but only the user that belongs to the cohort having the specific characteristic.

An advertisement area of the user terminal 100 may vary for each targeting segment. For example, the advertisement may be executed in an area in which the execution of the game is least interfered in a specific segment and the advertisement may be exposed to an area in which an advertisement effect is best like the center of the user terminal in the specific segment.

For example, the advertisement may be exposed to an area which less interferes with a charging user and exposed to the center of the user terminal for a non-charging user. Further, the execution of the advertisement or not and the advertisement area may be configured differently according to whether even the charging user currently plays the game.

For example, the advertisement may be exposed to only a part of the user terminal so as to recognize the advertisement target as a part of a game element.

A video advertisement including the game element is exposed while the game is executed, so that an increase in advertisement effect for a user who is absorbed in the game may be expected.

A banner such as "More view of game" is provided to promote another game before the game ends.

A strategy that exposes another game before the game ends may be included.

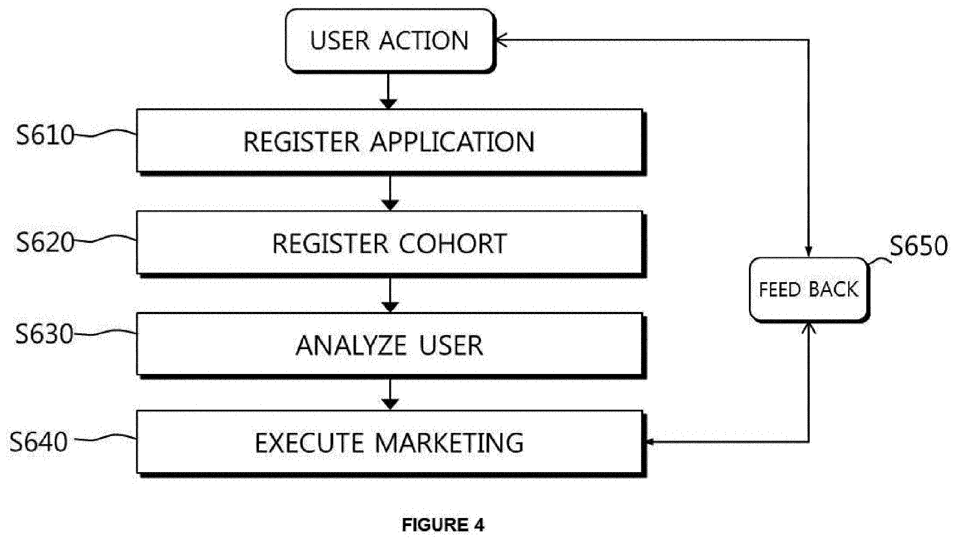

FIG. 4 illustrates that steps S510 to S570 are integrated into step S630 in order to more schematically describe the advertisement execution method of FIG. 3. In the targeting advertisement in the related art, the advertiser provides only the selection criterion of the targeting object based on the user information and the user action information and when the advertisement providing server 400 or the media server 300 is a mechanism that maximizes the advertisement income through the targeting advertisement based on the provided selection criterion, while since the advertisement providing method of the present invention optimizes the in-app sales as well as the advertisement income or optimizes the sum total of the in-app sales and the advertisement income, the advertisement providing method may additionally include a step (S610) of registering the application which becomes a pool of the user of which the advertisement is exposed and which becomes a targeting object of the cohort analysis and the segmentation. The application registering step (S610) may be performed by the advertiser terminal 200 or the development server of the game application or the advertisement providing server 400.

The cohorts may be different for each registered application and since the cohort may vary according to a feedback result of primary marketing execution, the advertisement providing method may additionally include a step (S620) of registering (alternatively, changing) the cohort. User analysis (S630) is performed, marketing execution (S640) are performed, and a feedback step (S650) is performed based thereon as described in FIG. 3.

The criteria and the number of cohorts may be decided and changed in the advertiser terminal 200 or the game application server.

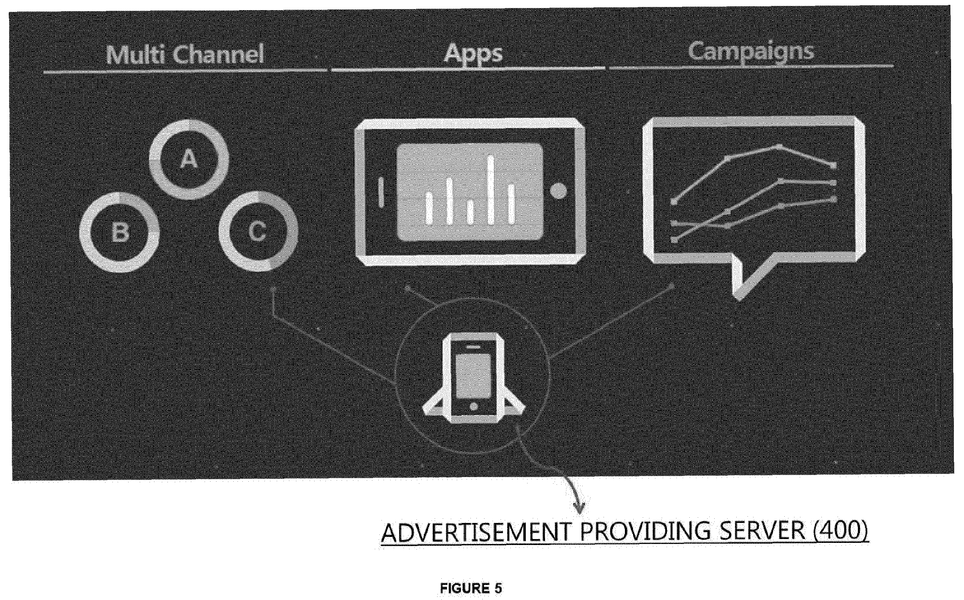

When the concept of the user analysis of the present invention is more schematically summarized by using FIG. 5, it can be seen that the advertisement providing server 400 analyzes the user for each cohort in various multiple channels by using the applications registered for the advertisement execution (campaigns). That is, when repeatedly described, it can be seen that the advertisement executing method of the present invention may use the application as the advertisement platform.

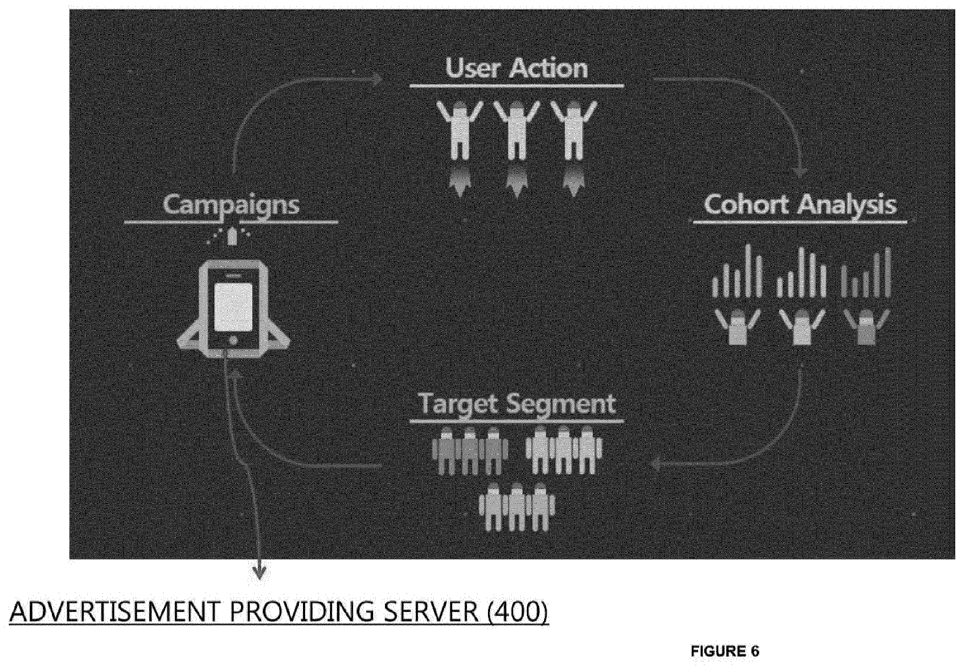

When the concept of the user analysis of the present invention is more schematically summarized by using FIG. 6, it can be seen that the advertisement providing server 400 generates a target segment which becomes the targeting object based on a result of analyzing the user action through cohort analysis for the advertisement execution (campaigns). That is, when repeatedly described, it can be seen that in the advertisement executing method of the present invention, the user analysis and the decision of the marketing target may interlock with each other on a straight line.

Hereinafter, the method that classifies the cohorts according to the charging or not which is one of various characteristics of the cohort in the present invention will be additionally described.

### [Method that differently configures advertisement providing methods of charging user and non-charging user]

The user analyzing system 421 may classify the plurality of users into a charging user group and a non-charging user group by using the user information such as the sales information, the number of payments/sum information, and the like of the user.

The user analyzing system 421 may classify the charging user group into a plurality of groups again. For example, the user analyzing system 421 may classify the charging user group into detailed top/medium/bottom charging user groups based on the user action information such as the charging sum/the number of charging times.

The user analyzing system 421 may classify the non-charging user group into a plurality of groups again. For example, the user analyzing system may, in detail, classify the non-charging user group into a potential charging user group and a potential cherry picker user group in detail based on a charging possibility depending on the user action information.

The marketing system 422 establishes different marketing strategies with respect to the classified user groups as described above. The marketing system 422 may differently configure the advertisement providing methods for the charging user group and the non-charging user group.

For example, the marketing system 422 may configure a partial area of a screen of the user terminal 100 as the advertisement area when the terminal of the user that belongs to the non-charging user group executes a predetermined application (e.g., the game). In addition, the marketing system may execute the advertisement in the advertisement area on the screen of the terminal of the user that belongs to the non-charging user group.

Contrary to this, the marketing system 422 may not execute the advertisement on the screen of the user terminal 100 when the terminal of the user that belongs to the charging user group executes the predetermined application. That is, an entire screen of the user terminal 100 that belongs to the charging user group is provided to an application area.

That is, since the user that belongs to the charging user group generates various sales while executing the application, an additional advertisement is not provided and while the user that belongs to the non-charging user group executes the application, the advertisement is executed on the screen of the user terminal 100 to generate sales using the advertisement.

Meanwhile, the marketing system 422 may configure a partial area of the screen of the user terminal 100 as an advertisement area and execute the advertisement in the advertisement area of the screen of the user terminal 100 even when the terminal of the user that belongs to the charging user group executes the predetermined application.

However, in this case, the advertisement area of the terminal of the user of the charging user group may be smaller than the advertisement area of the terminal of the user of the non-charging user group.

That is, while the advertisement is provided onto the screens of both the terminal of the user that belongs to the charging user group and the terminal of the user that belongs to the non-charging user group, only the sizes of the advertisement areas may be different from each other.

Alternatively, a text advertisement having relatively smaller exposure power is executed in the advertisement area of the terminal of the user of the charging user group and a video advertisement having relatively large exposure power may be executed in the advertisement area of the terminal of the user of the non-charging user group.

That is, while the advertisement is provided onto the screens of both the terminal of the user that belongs to the charging user group and the terminal of the user that belongs to the non-charging user group, formats of the advertisements executed in the advertisement areas may be different from each other.

Differently configuring the advertisement providing methods for the charging user group and the non-charging user group is not limited to the exemplified embodiment and may adopt various methods which are not exemplified.

In general, since the charging user occupies approximately 3% of all users in one game, continuous payment of a payment user is induced to increase the in-app sales and an unpayment user may secure an additional income through advertisement exposure to increase an entire income of the game.

Hereinafter, a method that provides the reward advertisement while executing the application in the present invention will be additionally described.

### [Method that provides reward advertisement while executing application]

The user terminal 100 may execute the predetermined application (e.g., the game).

The game application may provide various items to the user while being executed. On the game application, a user character acquires the item to change the user character. For example, the user character may have a similar form to humans, but is not limited thereto and may be provided in various forms including a similar form to animals/plants, foods, a robot, a vehicle, a ship, an airplane, and the like. The user character acquires items provided in the game to use the acquired items as his/her own article or use the acquired items to acquire a new capability of the user character and improve the existing capability.

In the exemplary embodiment of the present invention, as one of various forms of the items, an advertisement item may be provided.

For example, when the user character acquires the item provided in the game (that is, when an opponent or obstacle is removed from a shooting game, and the like, the item is provided as a compensation for the removal and the user character or the user may click on the provided item), the advertisement may be provided by a method such as outputting a predetermined image. In addition, when the user temporarily stops the game and completes viewing the corresponding image, the advertisement providing server may provide a reward to the user as a compensation for viewing the advertisement.

When the user character acquires the item provided in the game, the game application may query the user whether to view the advertisement.

When the user rejects the query, the game application may display a game screen on the screen of the user terminal 100 so that the user continuously plays the game.

On the contrary, when the user approves the query, the game application may display the advertisement screen without displaying the game screen on the screen of the user terminal 100. Alternatively, the game application may display the game screen in a partial area of the screen of the user terminal 100 and display the advertisement screen in another partial area so that the user continuously plays the game.

Alternatively, when the user character acquires the item provided in the game, the game application may immediately provide the advertisement without querying an intention of the user.

The user may wait until the advertisement ends or terminate the advertisement by clicking on a close button deployed at a predetermined location of the advertisement area.

Even in any case in which viewing the advertisement is not completed, the reward may not be provided to the user as the compensation for viewing the advertisement.

The game application may operate by interworking with the advertisement providing server or the application server including the advertisement providing server as described above.

Therefore, steps of a method or an algorithm described in association with the exemplary embodiments of the present invention may be directly implemented by hardware and software modules executed by the processor, or a combination thereof. The software module may reside on a random access memory (RAM), a ROM, an EPROM, an EEPROM, a flash memory, a register, a hard disk, a removable disk, a CD-ROM, or a predetermined type of computer-readable recording medium which is well known in the technical field to which the present invention belongs. The exemplary recording medium is connected to the processor and the processor may extract information from the recording medium and write the information in the storage medium. As another method, the recording medium may be integrated with the processor. The processor and the recording medium may reside in an application specific integrated circuit (ASIC). The ASIC may reside in the user terminal 100. As yet another method, the processor and the recording medium may reside in the user terminal 100 as individual components.

Although the embodiments of the present invention have been described with reference to the accompanying drawings as described above, those skilled in the art will be able to understand that the present invention can be implemented in other detailed forms without changing the technical spirit or an essential characteristic. Therefore, it should be appreciated that the embodiments described above are exemplificative in all aspects but not limitative.

### Reference numerals

- 100:: user terminal
- 200:: advertiser terminal
- 300:: a media server
- 400:: an advertisement providing server

## Claims

1. An advertisement providing method performed by an advertisement providing server apparatus, the method comprising:
acquiring information on an application user in order to generate a user group sharing a predetermined characteristic, that is, cohort;
generating the cohort and analyzing the cohort in accordance with the collected information;
generating a targeting user group, that is, a segment based on the cohort analysis information; and
executing an advertisement for the segment.

2. The method of claim 1, wherein the acquired user information and the cohort analysis information are stored in a predetermined database to call and use the stored user information and cohort analysis information in the generating of the segment.

3. The method of claim 1, wherein the advertisement is executed in a first cohort and the advertisement is not executed in a second cohort.

4. The method of claim 1, wherein the segment is generated to correspond to a combination of a plurality of cohorts or one segment is generated to correspond to one cohort.

5. The method of claim 3, wherein an advertisement area of a user terminal of the first cohort is decided differently in accordance with a characteristic of the cohort.

6. The method of claim 3, wherein the first cohort is a cohort in which in-app sales are not generated and the second cohort is a cohort in which the in-app sales are generated.

7. The method of claim 1, further comprising:
registering an application such as a game application to which the advertisement is exposed in the advertisement providing server.

8. The method of claim 7, wherein two or more cohorts are generated by using at least any one of payment of an item in the application or not, the number of residual items, a payment frequency, a payment sum, generation of sessions or not and the number of sessions in the application, an access record of the application, the number of access times, an access time zone, a level of the session in the application, and an installation path (that is, an introduction path into the application).

9. The method of claim 1, further comprising:
a feedback step of monitoring reactions of users and changing cohort generation information such as a criterion of the cohort and the number of cohorts, after executing an advertisement for the segment.

10. The method of claim 9, wherein the reactions of the users are any one of in-app sales, the number of purchase cases, an average payment sum per user, an average payment sum per purchase user, the number of purchase users and purchase rate, an advertisement income, and the number of application sessions/an average session time.

11. The method of claim 8, wherein the application is a game application, and the advertisement is not executed in a time zone in which a game play is active by analyzing the application access time zone or an advertisement medium is differently selected based on whether or not it is in the time zone in which the game play is active

12. The method of claim 1, wherein in the generating of the cohort and the analyzing of the cohort, a user access record is analyzed and in the generating of the segment, a promotion advertisement such as a reward advertisement is executed for a cohort in which the number of application access times decreases by using the analyzed access record.

13. An advertisement providing server apparatus based on a cohort, the apparatus comprising:
a user analyzing system acquiring information on an application user in order to generate a user group sharing a predetermined characteristic, that is, cohort and generating the cohort and analyzing the cohort in accordance with the collected information; and
a marketing system generating a targeting user group, that is, a segment based on the cohort analysis information and executing an advertisement in the segment.

14. The apparatus of claim 13, wherein the user analyzing system stores the acquired user information and the cohort analysis information in a predetermined database, and
the marketing system calls and uses the stored user information and the cohort analysis information in segmentation.

15. The apparatus of claim 13, wherein the marketing system executes the advertisement in a first cohort and does not execute the advertisement in a second cohort.

16. The apparatus of claim 13, wherein the segment is generated to correspond to a combination of a plurality of cohorts or one segment is generated to correspond to one cohort.

17. The apparatus of claim 15, wherein an advertisement area of a user terminal of the first cohort is decided differently in accordance with a characteristic of the cohort.

18. The apparatus of claim 15, wherein the first cohort is a cohort in which in-app sales are not generated and the second cohort is a cohort in which the in-app sales are generated.

19. The apparatus of claim 13, wherein an application such as a game application to which the advertisement is exposed is registered in the advertisement providing server, and the user analyzing system generates and analyzes the cohort based on information on a user of the application, and the marketing system decides whether to execute the advertisement in the application.

20. The apparatus of claim 19, wherein two or more cohorts are generated by using at least any one of payment of an item in the application or not, the number of residual items, a payment frequency, a payment sum, generation of sessions or not and the number of sessions in the application, an access record of the application, the number of access times, an access time zone, a level of the session in the application, and an installation path (that is, an introduction path into the application).

21. The apparatus of claim 13, wherein the advertisement is executed in the segment and reactions of users are monitored and cohort generation information such as a criterion of the cohort and the number of cohorts is changed.

22. The apparatus of claim 21, wherein the reactions of the users are any one of in-app sales, the number of purchase cases, an average payment sum per user, an average payment sum per purchase user, the number of purchase users and purchase rate, an advertisement income, and the number of application sessions/an average session time.

23. The apparatus of claim 20, wherein the application is a game application, and the advertisement is not executed in a time zone in which a game play is active by analyzing the application access time zone or an advertisement medium is differently selected based on whether or not it is in the time zone in which the game play is active.

24. The apparatus of claim 13, wherein the user analyzing system analyzes a user access record and the marketing system executes a promotion advertisement such as a reward advertisement for a cohort in which the number of application access times decreases by using the analyzed access record.
